# DEMANDE DE BREVET EUROPEEN

(11) **EP 0 992 923 A1**
(43) Date de publication de la demande: **12.04.2000**
(21) Numéro de dépôt: 99402473.5
(22) Date de dépôt: 08.10.1999
(51) Int. Cl.: G06F 17/40

(54) **Système d'acquisition de données, de traîtement et de commande**

(30) Priorité: 08.10.1998 FR 9812626
(71) Demandeur: THOMSON-CSF, 75008 Paris (FR)
(72) Inventeur: Catros, Jean-Yves, Thomson-CSF Prop. Industrielle, 94117 Arcueil Cédex (FR); Grapin, Gérard, Thomson-CSF Propriété Industrielle, 94117 Arcueil Cédex (FR); Jonca, Guy, Thomson-CSF Propriété Industrielle, 94117 Arcueil Cédex (FR); Quelin, Vincent, Thomson-CSF Propriété Industriel., 94117 Arcueil Cédex (FR)
(74) Mandataire: Chaverneff, Vladimir

(57) **Abrégé**

Le système de l'invention comporte un réseau de modules (M₁...Mₙ) dont certains sont reliés entre eux par un bus de terrain (2), et d'autres sont reliés entre eux et au bus de terrain par liaisons hertziennes (3). Chaque module est relié à au moins un capteur (C₁ ...Cₙ). Un poste de configuration et de collecte d'informations (5) est également relié au réseau.

## Description

La présente invention se rapporte à un système d'acquisition de données, de traitement et de commande.

Un exemple d'un système auquel se rapporte l'invention est un système de surveillance d'environnement (pollution de rivières, de sites industriels, etc...),

On connaît des systèmes d'acquisition de données et de traitement comportant plusieurs capteurs géographiquement dispersés, reliés chacun par liaison filaire à une centrale de gestion, ce qui représente une dépense non négligeable pour les fils de liaison lorsque les capteurs sont nombreux et éloignés de la centrale. De plus, pour un grand nombre de capteurs, le calculateur de la centrale peut être surchargé si le traitement des données des capteurs est sophistiqué.

Lorsque les capteurs sont des capteurs de paramètres relatifs à l'environnement (cours d'eau, nappes d'eau, terrains...), ils doivent être étanches, et même discrets (pour ne pas être l'objet d'actes de vandalisme...), ce qui n'est pas le cas des capteurs à liaison filaire.

D'autres systèmes connus, en particulier ceux développés pour une utilisation en milieu industriel, comportent des blocs comprenant des capteurs, des circuits d'acquisition et des circuits de traitement, ces blocs étant généralement alimentés par le secteur électrique. Ces blocs sont volumineux, non étanches et spécifiques d'une application donnée.

On connaît également des appareils d'acquisition de données autonomes, comportant des capteurs, des circuits d'acquisition de données et des moyens de stockage de ces données. Ces appareils, généralement dénommés « data loggers », nécessitent, lorsqu'ils sont dispersés dans la nature, le passage périodique de personnel pour en relever les données stockées, ce qui ne permet pas de les employer dans des systèmes nécessitant de disposer des données aussitôt après leur acquisition.

Au niveau de l'exploitation des données, ces systèmes connus ne permettent pas de résoudre de manière satisfaisante des problèmes importants : la validation décentralisée des données fournies par les capteurs (vérification, traitement), la détection des variations de ces données (pour déclencher une alarme ou pour activer un moteur, par exemple), et la reconfiguration d'au moins une partie du système sur le terrain .

La présente invention a pour objet un système d'acquisition de données fournies par des capteurs, de traitement de ces données, et de commande qui puisse être facilement mis en oeuvre dans diverses applications, qui comporte le maximum possible d'éléments standardisés faisant partie d'une famille limitée d'éléments matériels et logiciels, qui permette d'effectuer les traitements sur les données recueillies aussi bien sur les lieux de mesure qu'à distance, les capteurs pouvant être géographiquement éloignés les uns des autres, ces capteurs et leurs circuits associés pouvant fonctionner dans des environnements difficiles et étant discrets, ce système pouvant être facilement évolutif et reconfigurable, même sur le terrain.

Le système conforme à l'invention est du type comportant plusieurs capteurs ou groupes de capteurs, géographiquement éloignés, auxquels sont associés des dispositifs d'acquisition et de traitement de données fournies par ces capteurs, et il est caractérisé en ce que ces dispositifs sont réalisés sous forme de modules personnalisables associés en réseau de terrain, les tâches du système étant réparties sur au moins une partie des modules.

De façon avantageuse, le système comporte un poste de collecte des informations traitées par au moins une partie des modules.

La présente invention sera mieux comprise à la lecture de la description détaillée d'un mode de réalisation, pris à titre d'exemple non limitatif et illustré par le dessin annexé, sur lequel :
- la figure 1 est un bloc-diagramme d'un réseau de modules conforme à l'invention ;
- la figure 2 est un bloc-diagramme de l'un des modules de la figure 1,
- la figure 3 est un schéma fonctionnel d'un poste de configuration conforme à l'invention, et
- la figure 4 est une vue simplifiée d'une application telle que saisie sous l'environnement « éditeur graphique » conforme à l'invention.

La présente invention est décrite ci-dessous en référence à un système de surveillance d'environnement, mais il est bien entendu qu'elle n'est pas limitée à cette seule application, et qu'elle peut être mise en oeuvre dans d'autres applications comportant des capteurs simples ou complexes (par exemple des caméras vidéo) de grandeurs ou d'informations très diverses (physiques et/ou chimiques et/ou optiques et/ou électriques...), ces capteurs pouvant être éloignés les uns des autres.

Les informations élaborées par les modules associés à ces capteurs peuvent être utilisées de diverses façons : affichage, déclenchement d'alarmes, commande de mécanismes simples ou de processus de fabrication, ou de manipulation, etc. Parmi les autres applications possibles, on peut citer la surveillance de zones à protéger, la fabrication de substances ou d'appareils ou de machines, le tri automatisé d'objets, ...

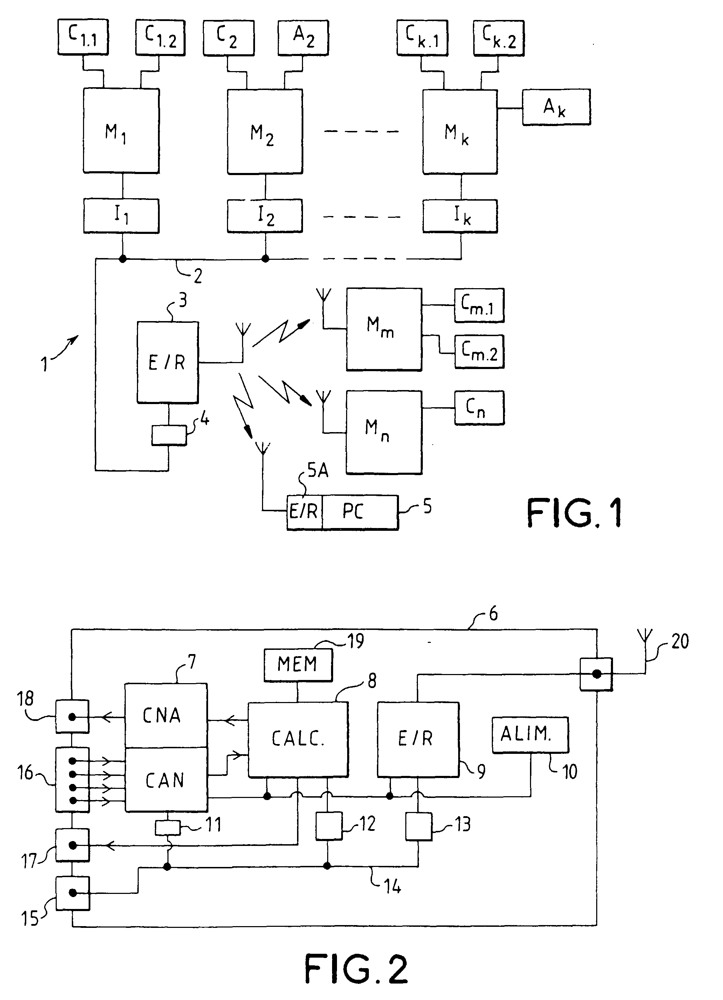

Le système 1 représenté en figure 1 comporte essentiellement plusieurs modules M1, M2...Mn reliés en réseau, chacun d'entre eux étant associé à un ou plusieurs capteurs C_{1.1}, C_{1.2}, C₂,...C_{n.1}, C_{n.2}. et actionneurs A₂...Aₖ. Ces capteurs et/ou actionneurs peuvent être à sortie analogique ou numérique.

Les capteurs sont soit directement fixés sur des connecteurs, correspondants des module, ces connecteurs étant étanches de préférence, soit reliés par fils à ces modules.

Les modules M₁ à Mₖ sont reliés à un bus de terrain filaire 2 à chaque fois via une interface appropriée I₁, I₂...Iₖ. Un émetteur-récepteur 3 est également relié au bus 2 via une interface 4. Cet émetteur-récepteur 3 assure la liaison hertzienne avec les autres modules tels que Mₘ et Mₙ ainsi qu'avec un poste 5 de configuration des modules et de collecte d'informations. Le bus 2 est un bus « Lon Works » de la société Echelon.

Les tâches réalisées par le système 1 sont essentiellement l'acquisition des données fournies par les capteurs (C_{1.1} à Cₙ), le traitement de ces données et leur exploitation (enregistrement, déclenchement d'alarmes, commande d'actionneurs tels que A₂,...Aₖ, etc...). Ces tâches sont réparties sur une partie des modules, mais, de préférence sur l'ensemble des modules M₁....Mₙ du système, qui peuvent être "personnalisés" lors de la constitution du système, ou par la suite (système évolutif).

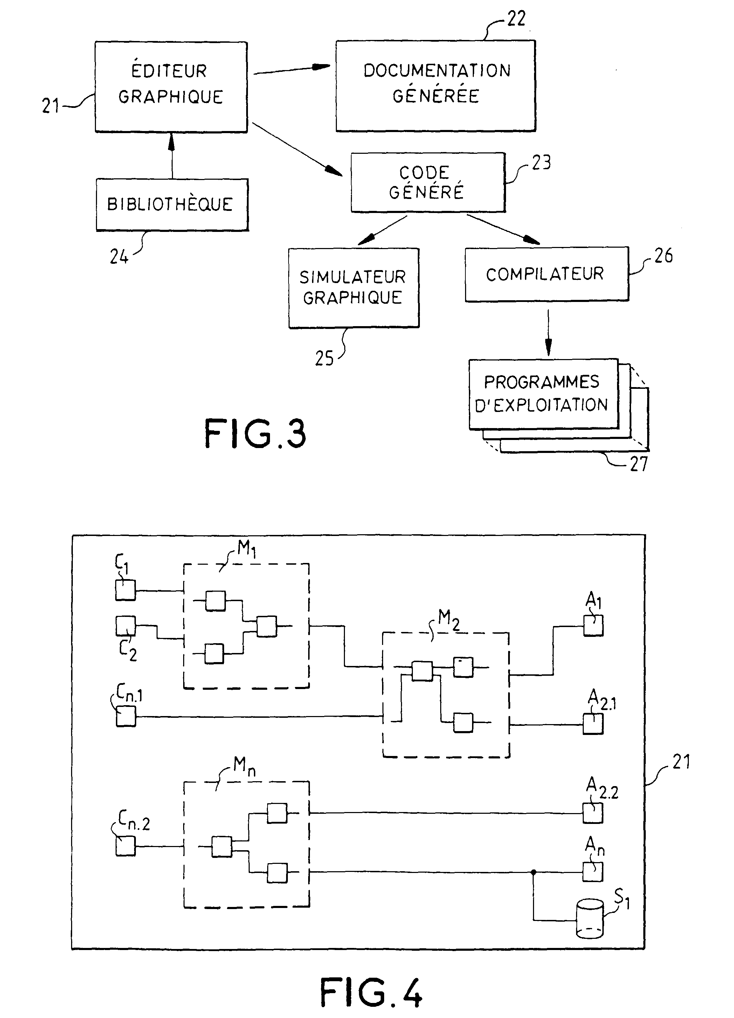

Ces modules peuvent être avantageusement disposés dans des conteneurs (également appelés "bornes"). Ces conteneurs peuvent être modulaires et sont réalisés de façon à résister à des contraintes d'environnement sévères (en ce qui concerne la température, l'hygrométrie, les effluents acides ou basiques, les pertubations électromagnétiques, etc...). De façon avantageuse, ces conteneurs sont transportables et faciles à dissimuler dans l'environnement, de préférence au voisinage des capteurs et au voisinage des dispositifs d'exploitation des mesures. Les sous-ensembles disposés dans ces bornes sont avantageusement des éléments standard. L'assemblage de ces sous-ensembles et/ou des bornes assure les fonctionnalités désirées, qui sont programmées par exemple de la façon décrite ci-dessous en référence aux figures 3 et 4.

Les modules du système 1 peuvent être classés dans les quatre catégories suivantes, en fonction des tâches qu'ils assurent :
- Les modules de traitement, de calcul et de stockage de données, réalisés à partir de micro-ordinateurs (type PC par exemple). Ils incorporent une intelligence locale qui leur permet d'assurer le traitement des données acquises et le "contrôle commande" de l'application qui leur correspond.
- Les modules de communication assurent la transmission des informations sur le bus de terrain 2, qui peut comporter des médias divers (paires torsadées, courants porteurs, radio HF,...). La partie de l'application qui utilise ces modules de communication peut demander à l'une de ses bornes de se comporter comme un relais destiné à mettre en communication des équipements trop distants pour pouvoir échanger directement des données, ou assurer le changement de média (par exemple, pour passer de la transmission par radio HF vers celle par une paire torsadée...).
- Les modules d'acquisition-commande assurent l'interface avec les capteurs et les actionneurs, que ceux-ci soient intelligents ou non, par l'intermédiaire de dispositifs d'entrée/sortie pouvant être analogiques (commande par tensions de 0 à 10 V et courants de 4 à 20 mA, par exemple) ou en tout-ou-rien, ou par l'intérmédiaire d'un bus de terrain (de type Lonworks,JBUS, Modbus, CAN,...).
- Les modules d'alimentation assurent une autonomie maximale aux bornes, à l'aide de piles ou de batteries de grande autonomie. Une gestion d'énergie optimisée, combinée à des modes de veille spécifiques, assure une autonomie maximale de l'ensemble borne + capteurs + actionneurs. Si nécessaire, les modules d'alimentation peuvent être complétés chacun par un dispositif de conversion d'énergie solaire, afin d'augmenter l'autonomie de la borne correspondante.

Ainsi, on obtient un système évolutif , dont les divers sous-ensembles sont modulaires et personnalisables à tout moment (lors de sa première constitution, ou lors de son exploitation), par chargement ou téléchargement de programmes dans les sous-ensembles (modules) concernés.

On a représenté en figure 2 le bloc-diagramme de l'un des modules de la figure 1, par exemple le module Mₙ. Ce module Mₙ comporte plusieurs sous-ensembles électroniques avantageusement disposés à l'intérieur d'une enceinte étanche 6. Selon un mode de réalisation préféré, cette enceinte est cylindrique et disposée, pour des mesures relatives au sol, dans un puits cylindrique correspondant foré dans le sol, ou bien immergée dans un fluide s'il s'agit de surveiller un fluide.

L'enceinte 6 renferme, dans l'exemple représenté, quatre sous-ensembles principaux 7 à 10, qui sont respectivement un bloc 7 convertisseur analogique-numérique et convertisseur numérique-analogique, un bloc calculateur 8, un bloc émetteur-récepteur 9 et un bloc 10 d'alimentation des circuits des autres blocs. Les entrées de commande et les entrées/sorties de données des blocs 7 à 9 sont reliées, via une interface appropriée, respectivement 11 à 13, à un bus interne 14 aboutissant à un connecteur 15, fixé sur l'enceinte 6, auquel est raccordé le bus de terrain 2.

Les entrées analogiques du convertisseur analogique-numérique du bloc 7 sont reliées à un connecteur 16, fixé sur l'enceinte 6, auquel sont reliés des capteurs analogiques tels que C_{1.1}, C_{1.2}...

La sortie du convertisseur analogique-numérique est reliée à une entrée correspondante du calculateur 8. Un autre connecteur, référencé 17, fixé sur l'enceinte 6 est également relié à l'entrée du calculateur 8. Ce connecteur 17 est prévu pour le branchement de capteurs à sortie numérique. Un autre connecteur, référencé 18, fixé sur l'enceinte 6, est relié à la sortie analogique du convertisseur numérique-analogique du bloc 7. Il est destiné à la connexion d'appareils électriques que peut commander le module Mn, par exemple un moteur, une alarme, une vanne...

Le calculateur 8, par exemple un microcontrôleur, est avantageusement relié à une mémoire de masse 19, destinée à stocker des données ne nécessitant pas d'exploitation en temps réel, et qui peuvent, par exemple, être transmises au poste 5 sur sa demande.

L'émetteur-récepteur 9 est relié à une antenne 20, qui peut être discrète (un simple bout de fil électrique de quelques centimètres de long, par exemple). Cet émetteur-récepteur peut, par exemple, fonctionner dans la bande de fréquences de 433 Mhz, ne nécessitant pas d'autorisation (en France), ou bien être du type GSM. Bien entendu, les modules qui ne communiquent que via le bus 2 n'ont pas besoin de bloc 9.

Le poste 5 comporte essentiellement un calculateur, par exemple de type « PC » et des moyens lui permettant de communiquer avec au moins une partie des modules M1 à Mn. Dans l'exemple représenté, le poste 5 comporte un émetteur-récepteur 5A assurant la liaison radio avec l'émetteur-récepteur 3 et/ou l'un au moins des moules équipés d'un émetteur-récepteur correspondant.

Selon un autre mode de réalisation (non représenté), le poste 5 comporte une interface permettant de le brancher directement sur le bus 2.

Le bus 2 et/ou la liaison radio via le poste 3 et les modules équipés d'émetteurs-récepteurs (tels que le bloc 9), servent non seulement à faire communiquer les modules avec le poste 5, mais également à faire communiquer entre eux tous les modules ou une partie d'entre eux. En effet, les informations fournies par au moins une partie des capteurs reliés à des modules différents peuvent être combinées entre elles (par exemple pour comparer la température et la composition de l'eau d'une rivière en amont et en aval d'une usine déversant des effluents dans cette rivière). La combinaison de telles informations peut se faire dans l'un des modules du réseau ou bien de façon répartie dans plusieurs modules (par exemple si la combinaison nécessite une grande puissance de calcul), et ce, selon la programmation effectuée par le fabricant ou par l'utilisateur, préalablement à la mise en service du réseau ou bien, en cas de modification du programme d'exploitation du réseau en cours d'exploitation, par téléchargement d'un nouveau programme, sous la commande du poste 5.

La programmation des modules du réseau 1 se fait généralement de la façon suivante. Dans une étape de préparation, l'utilisateur définit, par exemple à l'aide d'un éditeur graphique, de la façon décrite ci-dessous en référence à la figure 3, les modules à utiliser (type de module, capteurs à raccorder, données à enregistrer, signaux de commande à envoyer aux bornes de sortie telles que la borne 18, traitements à réaliser...) et leur position sur un plan préparé en laboratoire (assemblage du matériel, chargement du logiciel d'exploitation...).

A l'étape suivante, qui est l'installation sur site, un opérateur positionne sur ce site les modules conformément à leur implantation, telle que définie à l'étape précédente. De façon avantageuse, l'opérateur est équipé d'un calculateur portable (qui peut être le poste 5) muni d'une interface appropriée, et effectue sur le terrain les tests et les paramétrages nécessaires : calibration des capteurs, test de transmission. A la fin de cette étape, le système est opérationnel.

A l'étape de préparation, l'utilisateur ou le fabricant utilise un logiciel d'aide à la création de réseau depuis le poste de configuration 5. On a représenté en figure 3 les différentes fonctions du poste 5 mis en oeuvre pour la configuration du système. L'éditeur graphique 21 permet de placer les modules sur un plan du site à équiper et à visualiser leurs positions, de spécifier la composition des modules et de visualiser cette composition (sous-ensembles disposés dans l'enceinte 6 et capteurs reliés aux modules), de spécifier les traitements réalisés par le réseau et visualiser ces traitements réalisés par le réseau et visualiser ces traitements (traitement global réalisé par l'ensemble des modules et traitements spécifiques). Il est à noter que ces traitements incluent non seulement les calculs effectués sur les informations fournies par les capteurs, mais aussi toutes les opérations d'acquisition, de stockage et de transmission de données permettant de définir le fonctionnement du réseau de modules tel qu'il apparaît à l'utilisateur. On a choisi, dans le mode de réalisation préféré, de spécifier les traitements au niveau du réseau plutôt qu'au niveau de chaque module, du fait que la gestion des communications doit être assurée de façon que les traitements effectués dans un module puissent recevoir des informations de l'un quelconque des autres modules, ou puissent envoyer des informations à l'un quelconque des autres modules, ce qui rend la gestion transparente pour l'utilisateur.

Dans l'éditeur graphique, la décomposition modulaire des fonctions est hiérarchique, sous forme de schémas-blocs, graphiquement reliés entre eux. Le schéma de plus haut niveau représente le réseau des modules physiques. Chaque sous-ensemble est défini par un bloc qui a la fonction de transfert de ce bloc et génère des signaux de sortie (résultats de calculs ou signaux de commande) et qui est paramétré à l'aide de cette interface graphique. La propagation des signaux dans le réseau de blocs s'effectue depuis les entrées (signaux numérisés) jusqu'aux sorties, en traversant les blocs de calcul. Bien entendu, les blocs peuvent être connectés à des boucles de rétroaction.

L'éditeur graphique, qui comporte un programme établi à cet effet, assiste constamment l'utilisateur pour la génération automatique du code applicatif en effectuant, après chaque action, au moins les contrôles suivants : contrôle de la cohérence des types des entrées et sorties reliées (compatibilité des niveaux des signaux de sortie des capteurs avec les niveaux d'entrée tolérables par les circuits auxquels ils sont reliés, etc...), topologie du réseau (connexité, éloignement à partir des sources, ...), compatibilité des fréquences d'échantillonnage (ce qui est important en cas d'utilisation de boucles de rétroaction et de sous-ensembles à entrées multiples), complétude de la documentation des composants générée (22) à partir de l'éditeur graphique. Ceci permet de mettre en évidence les erreurs et de les localiser. Après vérifications, l'éditeur génère un code source (23) de programme pour chacun des modules du système. Ce code source peut être avantageusement en langage C⁺⁺.

La conception d'une application s'appuie sur des bibliothèques de sous-ensembles modulaires prédéfinis (24), tout en laissant la possibilité d'en définir de nouveaux (en paramétrant leurs propriétés à travers l'interface utilisateur que représente l'éditeur graphique, ce, en respectant des normes simples de codage, par exemple en langage C⁺⁺, des fonctions de transfert des sous-ensembles utilisés). Ces sous-ensembles modulaires peuvent être composites (en intégrant des capteurs...) et constituer des sous-systèmes réutilisables dans la conception d'autres parties du système.

Sans quitter l'éditeur graphique, le code source est automatiquement intégré dans un environnement de test (généralement dénommé « debug ») et de simulation graphique (25) qui permet de valider les sous-ensembles développés par l'utilisateur et de simuler le fonctionnement d'ensemble de chaque module. Les signaux fournis par les capteurs et ceux envoyés aux actionneurs (connecteur 18) sont affichés sur un oscilloscope intégré au poste 5 et peuvent être traités de façon classique (filtrage, zoomage, ...). Le code des fonctions de transfert des sous-ensembles ainsi développés peut être modifié lors de la mise au point (les traces d'actions de « debug » peuvent être listées dans une fenêtre du programme de test). Le paramétrage de chaque sous-ensemble, tel que défini par son concepteur, est accessible pendant la simulation à travers l'interface utilisateur qui se configure automatiquement. La simulation du fonctionnement du système, ou de parties de ce système, en mode multitâches, est contrôlable à travers l'interface utilisateur de l'environnement de test (vitesse, marche/arrêt, réinitialisation, synchronisation inter-bornes, ...).

Lorsque les sous-ensembles et l'application sont validés (simulations satisfaisantes), l'éditeur graphique lance la génération du code cible de chaque module (26, 27).

On a représenté en figure 4 un exemple d'application saisie sous l'environnement « éditeur graphique » 21, à l'étape de préparation. Sur son écran apparaissent les capteurs C₁, C₂, C_{n.1}, C_{n.2}, les modules de traitement utilisés : M₁, M₂ et Mₙ, et les dispositifs de sortie : actionneurs A₁, A_{2.1}, A_{2.2} et Aₙ, ainsi qu'un dispositif de stockage d'informations S₁ (ayant une fonction de « data logger »). Dans les modules M₁, M₂ et Mₙ apparaissent les sous-ensembles constitutifs de traitement. Les liaisons entre ces différents éléments seront établies à l'étape suivante.

## Revendications

1. Système d'acquisition de données fournies par des capteurs, de traitement de ces données et de commande du type comportant plusieurs capteurs (C_{1.1} à C_{n.2}) ou groupes de capteurs géographiquement éloignés, auxquels sont associés des dispositifs d'acquisition et de traitement des données fournies par ces capteurs, caractérisé en ce que ces dispositifs sont réalisés sous forme de modules personnalisées (M₁...Mₙ) associés en réseau de terrain (2), les tâches du système étant réparties sur au moins une partie des modules.

2. Système selon la revendication 1, caractérisé en ce que les différentes catégories de modules sont : des modules de traitement, de calcul et de stockage de données, des modules de communication, des modules d'acquisition - commande et des modules d'alimentation.

3. Système selon la revendication 1 ou 2, caractérisé en ce qu'il comporte un poste de configuration (5).

4. Système selon la revendication 1,2, ou 3, caractérisé en ce qu'au moins une partie des modules sont reliés à des actionneurs (A₂, Aₖ).

5. Système selon l'une des revendications 1 à 4, caractérisé en ce que le réseau comporte des liaisons hertziennes (3, Mₙ, Mₘ) entre au moins une partie des modules.

6. Système selon l'une des revendications précédentes, caractérisé en ce que les modules comportent chacun un bloc convertisseur analogique/numérique et/ou numérique/analogique (7), un calculateur (8) et des moyens d'alimentation (10).

7. Système selon la revendication 6, caractérisé en ce qu'au moins une partie des modules contiennent une mémoire de masse (19) associée au calculateur.

8. Système selon la revendication 6 ou 7, caractérisé en ce que les moyens d'alimentation comportent une pile ou un accumulateur.

9. Système selon l'une des revendications 6 à 8, caractérisé en ce qu'au moins une partie des modules comportent un émetteur-récepteur (9).

10. Système selon l'une des revendication 6 à 8, caractérisé en ce qu'au moins une partie des modules comportent chacun un bus interne (14) auquel sont reliés les blocs des modules en question par une interface (12, 13), ce bus interne étant relié directement au « bus de terrain » du système.

11. Système selon l'une des revendications précédentes, caractérisé en ce que le poste de configuration comporte un éditeur graphique (21) et des moyens pour produire un code cible pour chacun des modules du système (24, 26).

12. Procédé de configuration d'un réseau de modules selon l'une des revendications 1 à 11, caractérisé en ce qu'il consiste à définir les types de modules à utiliser, les capteurs à leur raccorder, les données à traiter, et leur position sur un plan du site d'implantation, à générer le logiciel d'exploitation à charger dans chaque module et à le charger dans les modules.

13. Procédé selon la revendication 12, caractérisé en ce que la définition du réseau et la génération du logiciel d'exploitation sont réalisés à l'aide d'un éditeur graphique.

14. Procédé selon la revendication 12 ou 13, caractérisé en ce que la production du logiciel d'exploitation se fait après simulation.
